# EUROPEAN PATENT APPLICATION

(11) **EP 1 348 888 A2**
(43) Date of publication of application: **01.10.2003**
(21) Application number: 03425190.0
(22) Date of filing: 26.03.2003
(51) Int. Cl.: F16H 29/08

(54) **Stepless speed variator**

(30) Priority: 28.03.2002 IT VR20020027
(71) Applicant: Bertini, Gabriele, 37014 Castelnuovo del Garda (Prov. of Verona) (IT)
(72) Inventor: Bertini, Gabriele, 37014 Castelnuovo del Garda (Prov. of Verona) (IT)
(74) Representative: Modiano, Guido

(57) **Abstract**

A stepless speed variator (1), comprising an input shaft (2) connectable to a source of motive power and a driven output shaft (3) connectable to a load, motion transmission means being interposed between the input shaft and the output shaft, the motion transmission means comprising first motion conversion means (200) suitable to convert the rotary motion of the input shaft into a back-and-forth motion of one or more kinematic transmission elements, each of which is connected kinematically to second motion conversion means (300) converting back-and-forth motion into rotary motion of the output shaft, means for varying the stroke of each kinematic transmission element being furthermore provided in order to vary the motion transmission ratio.

## Description

The present invention relates to a stepless speed variator.

In the background art, mechanical motion transmission devices that allow a continuous variation of the transmission ratio are constituted by systems with pulleys that have a variable diameter and belts or by other systems with coupling by contact.

These known devices are not free from drawbacks, including the fact that it is impossible to transmit fully the torque to heavy vehicles or loads due to the inevitable loss of grip, with consequent onset of slippage between the coupled elements.

The aim of the present invention is to provide a valid solution to the technical problem mentioned above by providing a stepless speed variator that allows to transfer power from the driving shaft to the driven shaft by using couplings of the rigid type.

Within this aim, an object of the present invention is to provide a stepless speed variator that allows easy fine variation of the ratio between the rpm rate of the driving shaft and the rpm rate of the driven shaft.

This aim and this and other objects that will become better apparent hereinafter are achieved by a stepless speed variator according to the invention, which comprises an input shaft that can be connected to a source of motive power and a driven output shaft that can be connected to a load, variator means for varying the angular velocity of said output shaft being interposed between said input shaft and said output shaft, and is characterized in that said variator means comprise means for converting the rotary motion of said input shaft into a back-and-forth motion of at least one kinematic transmission element, which is connected kinematically to means for converting said back-and-forth motion into the rotary motion of said output shaft, said speed variator means comprising means for varying the stroke of said at least one kinematic transmission element.

Further characteristics and advantages of the invention will become better apparent from the description of preferred but not exclusive embodiments of the variator according to the invention, illustrated by way of non-limitative example in the accompanying drawings, wherein:
Figure 1 is a schematic side elevation view of the variator according to the invention;

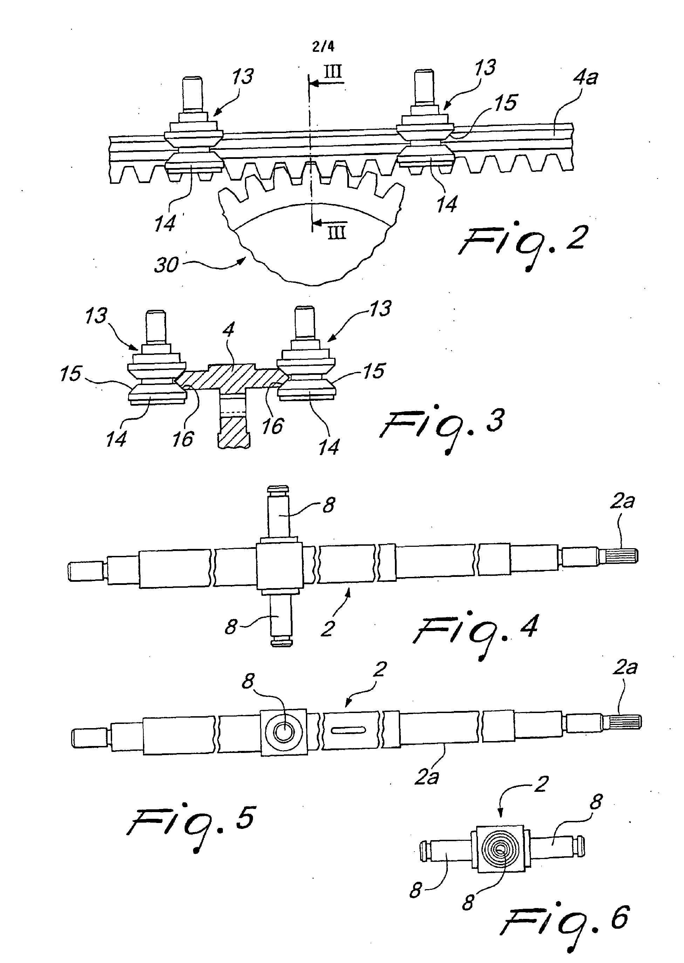

Figure 2 is an enlarged-scale view of the kinematic transmission element engaged with a freewheel gear and with guiding means;
Figure 3 is a sectional view, taken along the line III-III of Figure 2;
Figure 4 is a top sectional elevation view of the input shaft;
Figure 5 is a side view of the input shaft of Figure 4;
Figure 6 is a front view of the input shaft shown in Figures 4 and 5;
Figure 7 is a partial enlarged-scale side elevation view of the kinematic transmission element and of a rod-like element of the first motion conversion means;
Figure 8 is a top view of the kinematic transmission element and of the rod-like element of Figure 7;
Figure 9 is a sectional view, taken along the plane IX-IX of Figure 8;
Figure 10 is a sectional view, taken along the plane X-X of Figure 8;
Figure 11 is an enlarged-scale side elevation view of a detail of the first motion conversion means; and
Figure 12 is a schematic partial side elevation view of the variator according to the invention, illustrating means for adjustably varying the angle of inclination of the longitudinal axis of the kinematic transmission element with respect to the rotation axis of the input shaft.

In the examples of embodiment that follow, individual characteristics, given in relation to specific examples, may actually be interchanged with other different characteristics that exist in other examples of embodiment.

Moreover, it should be noted that anything found to be already known during the patenting process is understood not to be claimed and to be the subject of a disclaimer.

With reference to the figures cited above, the stepless speed variator according to the invention, generally designated by the reference numeral 1, comprises an input shaft 2, which can be connected, for example by way of a first coupling 2a, to a source of motive force, such as for example an electric motor or an internal-combustion engine or any other kind of motor, and furthermore comprises an output shaft 3, which constitutes the driven shaft of the variator 1 and in turn can be connected, for example by way of a second coupling 3a, to a load that is meant to receive mechanical power from the source of motive force.

The input shaft 2 and the output shaft 3 are supported by the fixed structure, not shown, of the variator 1 by means of bearings, which are generally designated by the reference numeral 100. In a manner that conforms to the art, there are also thrust bearings 101 for supporting the input shaft 2, or in an equivalent manner for the other rotatable elements or members that compose the variator 1.

Motion transmission means are interposed between the input shaft 2 and the output shaft 3 and allow to transmit motion from the input shaft 2 to the output shaft 3 with a preset transmission ratio and with the possibility to vary continuously said transmission ratio by way of an external actuation.

According to the invention, the motion transmission means perform their function by using first motion conversion means 200, which convert the rotary motion of the input shaft 2 into a back-and-forth motion of one or more kinematic transmission elements 4, which are in turn connected kinematically to second motion conversion means 300, which convert said back-and-forth motion into the rotary motion of the output shaft 3.

Also according to the invention, the variator 1 is furthermore provided with means for varying the stroke of said kinematic transmission elements 4; in particular, by acting on the means for varying the stroke of the kinematic transmission elements 4, the transmission ratio is varied as better described hereinafter.

In greater detail, the first motion conversion means 2 are formed by one or more conversion elements 5, each of which can be connected kinematically to the input shaft 2 and is connected to a respective kinematic transmission element 4 in order to actuate it with a back-and-forth motion.

A particular aspect of the invention consists of the fact that each one of the conversion elements 5 can be actuated with an oscillating motion on a respective oscillation plane formed by the plane that passes through the rotation axis of the input shaft 2 and through the point where each conversion element 5 is connected to the corresponding kinematic transmission element 4.

Conveniently, the first motion conversion means are provided with an actuation element 6, which is functionally connected, by means of at least one coupling portion 6a, to the conversion elements 5 and is meant to make each conversion element 5 oscillate on the corresponding oscillation plane.

Said function can be achieved for example by making the actuation shaft 6 rotate rigidly with the input shaft 2, in order to provide the functional interconnection between said input shaft and each conversion element 5.

Conveniently, the actuation element 6 is provided with a converter.

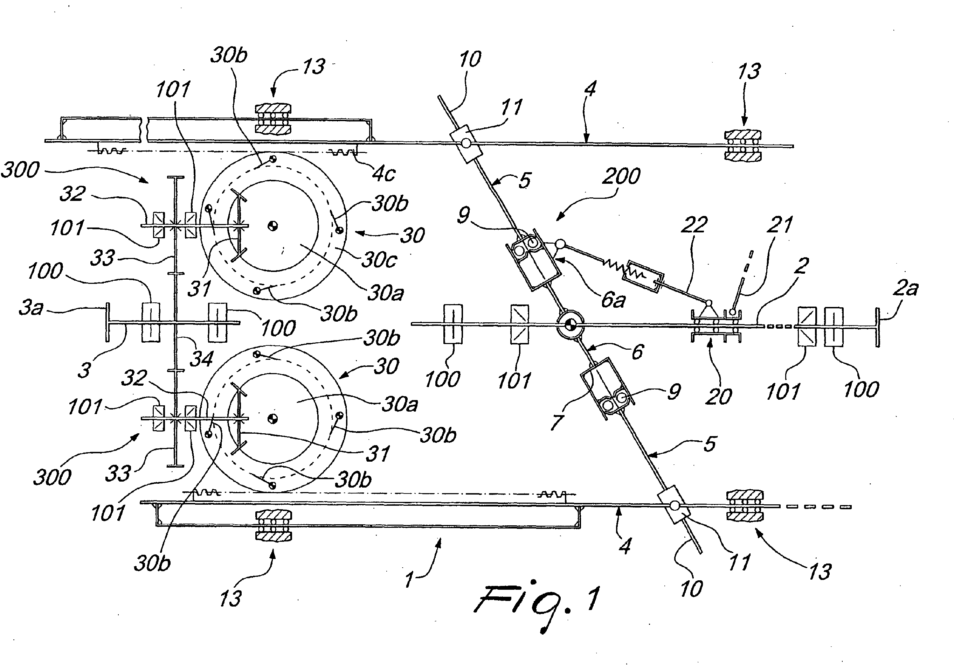

Figure 1 illustrates an embodiment of the invention in which the converter is constituted by an annular element 7, which is crossed centrally by the input shaft 2.

Advantageously, the annular element 7 is supported diametrically and rotatably by two pivots 8, which rotate rigidly with the input shaft 2 and are orientated substantially at right angles to the rotation axis of the input shaft 2.

In this manner, the annular element 7 can be driven by the input shaft 2 in its rotary motion and at the same time can rotate on command about a diametrical axis so that it can be arranged, with respect to the input shaft 2, on a plurality of planes of arrangement, each of which forms a different angle of inclination with the rotation axis of the input shaft 2.

At least two conversion elements 5 are connected to the outer lateral surface of the annular element 7 through the interposition of at least one ring of rolling bodies 9; each one of said conversion elements is conveniently constituted by a rod-like element 10 that protrudes radially with respect to the annular element 7.

In another embodiment, not shown in the figures, the actuation element 6 can be provided with a converter that is constituted by at least one disk-like body provided with a central opening crossed by the input shaft 2.

Conveniently, said disk-like body rotates rigidly with the input shaft 2 and at the same time is supported by the input shaft 2 so that it can rotate, with respect to the input shaft 2, about its own diametrical axis, so that it can be orientated by actuation with respect to the input shaft 2. In this manner, the disk-like body can be arranged on a plurality of different planes, each of which forms a respective angle of inclination with the rotation axis of the input shaft 2.

Also according to said other embodiment of the invention, the disk-like body furthermore has a face that is coupled to the motion conversion elements 5, with the interposition of the rolling bodies 9, which allow to disengage the conversion elements 5 from the rotation of the disk-like body performed rigidly with the input shaft 2.

Preferably, a corresponding disk-like element faces the disk-like body, with the rolling bodies 9 interposed. Said disk-like element rigidly supports, on diametrically opposite sides, at least two rod-like elements 10, which protrude radially with respect to the corresponding disk-like element and are in turn connected to the respective kinematic transmission elements 4.

An important aspect of the invention consists of the fact that said means for varying the stroke of the kinematic transmission elements 4 are constituted by means for varying the angular oscillation stroke of the motion conversion elements 5.

Advantageously, said means for varying the angular oscillation stroke of the kinematic transmission elements 4 are constituted by means for moving the actuation element 6 from an inactive position, in which the output shaft 3 is uncoupled from the input shaft 2, to a plurality of active positions, whose number is substantially infinite, according to the invention, and vice versa, and from one active position to another.

More particularly, a respective motion transmission ratio corresponds to each one of said active positions.

With reference to the embodiments described above of the actuation element 6 and to Figure 1, the inactive position of the actuation element 6 occurs in the position in which the converter, and more specifically the annular element 7 or likewise the disk-like body, are arranged on a plane that is substantially perpendicular to the rotation axis of the input shaft 2. In this position, the conversion elements 5 are in fact aligned with the converter, which by way of the disengagement produced by the rolling bodies does not produce the oscillating motion of the conversion elements 5.

Again with reference to the cited embodiments and in particular to Figure 1, each active position of the actuation element 6 corresponds to a respective angular arrangement of the converter, i.e., of the annular element 7 or likewise of the disk-like body, and more specifically each active position of the actuation element 6 corresponds to a respective angle of inclination of the plane of arrangement of the annular element 7 or, likewise, of the disk-like body with respect to the rotation axis of the input shaft 2.

Accordingly, a continuous adjustment of the inclination angle formed by the plane of arrangement of the converter, and more specifically of the annular element 7 or of the disk-like body 7, with respect to the rotation axis of the input shaft 2, is equivalent to a continuous transition of the actuation element 6 from one active position to another, and this entails a continuous transition to different motion transmission ratios. It is clearly evident that in a fully equivalent manner, the continuous transition of the converter, i.e., of the annular element 7 or of the disk-like body, from a position in which it is arranged at right angles to the rotation axis of the input shaft 2 to a position in which it is arranged on an inclined plane with respect to the rotation axis of the input shaft 2 corresponds to a continuous transition of the actuation element 6 from its inactive position to one of its active positions, i.e., to the continuous transition from a condition in which the transmission ratio is zero, and therefore the variator 1 is in neutral and the input shaft 2 can accordingly rotate freely while the output shaft 3 remains motionless, to a condition in which the transmission ratio is other than zero. Similar observations remain valid for the transitions that are the reverse of the ones cited above by way of example.

Advantageously, the means for moving the actuation element 6 are formed by means for moving the coupling portion 6a along a direction that is substantially parallel to the rotation axis of the input shaft 2.

Said movement means are constituted by a slider 20, which rotates rigidly with the input shaft 2 but can perform a sliding translational motion in an axial direction with respect to said shaft, for example by providing the engagement of a polygonal seat formed by the slider 20 with a portion 2a having a polygonal cross-section of the input shaft 2. The slider 20 is functionally connected to a lever system 21 whose actuation allows to move, advantageously in a very precise manner, the slider along the axis of the input shaft 2.

The slider 20 is connected by means of a linkage system to the coupling portion 6a, so that as a consequence of its translational actuation it is possible to move the coupling portion 6a. In particular, one end of a linkage 22 is suitably articulated to the slider 20; said linkage is articulated, at its other end, to the coupling portion 6a of the actuation element 6.

Advantageously, the linkage 22 is constituted by a bar whose length can be adjusted by way of a threaded coupling.

Specifically with reference to Figure 1, it can be noticed that the translational motion of the slider toward and away from the annular element 7 causes a movement of the coupling portion 6a that changes the angle of inclination of the annular element 7 with respect to the rotation axis of the input shaft 2.

In order to balance the rotating masses, it is possible to provide conveniently a balancing linkage and a balancing slider, which are structurally similar to the linkage 22 and the slider 20 but are arranged symmetrically to them with respect to the point of intersection between the rotation axis of the input shaft 2 and the diametrical rotation axis of the annular element 7.

Advantageously, the kinematic transmission elements 4 have an elongated body that at least partially engages guiding means 13, which are meant to ensure that the kinematic transmission elements 4 perform an alternating translational motion along a direction that is substantially parallel to the rotation axis of the input shaft 2.

For example, the guiding means 13 are provided with rolling elements, constituted by at least one pair of free wheels 14, which have a rolling coupling with a respective kinematic transmission element 4 on mutually opposite sides.

Conveniently, each free wheel 14 has, on its lateral surface, an annular groove with flared side walls 15, which is engaged by a protrusion 16 that is shaped correspondingly and runs along the longitudinal extension of the respective kinematic transmission element 4 in its portion that engages the guiding means 13.

Advantageously, each rod-like element 10 is connected to the respective kinematic transmission element 6 so that it can move, with respect to it, both by rotating about its own longitudinal axis and about an axis that is perpendicular to its oscillation plane, and by sliding axially.

This solution arises from the fact that in practice it has been found that during their alternating oscillation, the rod-like elements 10 must be able to perform not only an axial sliding motion with respect to the respective kinematic transmission element 4 but also a fraction of a turn about their own axis, again with respect to the respective kinematic transmission element 4, at the motion reversal that occurs at the stroke limits of their alternating oscillation.

More specifically, each rod-like element 10 can be coupled, so that it can slide and rotate about its own longitudinal axis, to the seat formed by a respective connecting sleeve 11, which is preferably constituted by a ballscrew guide. The connecting sleeve 11 is in turn pivoted to a respective transmission element 4 about a rotation axis that is substantially perpendicular to the oscillation plane of the rod-like element 10.

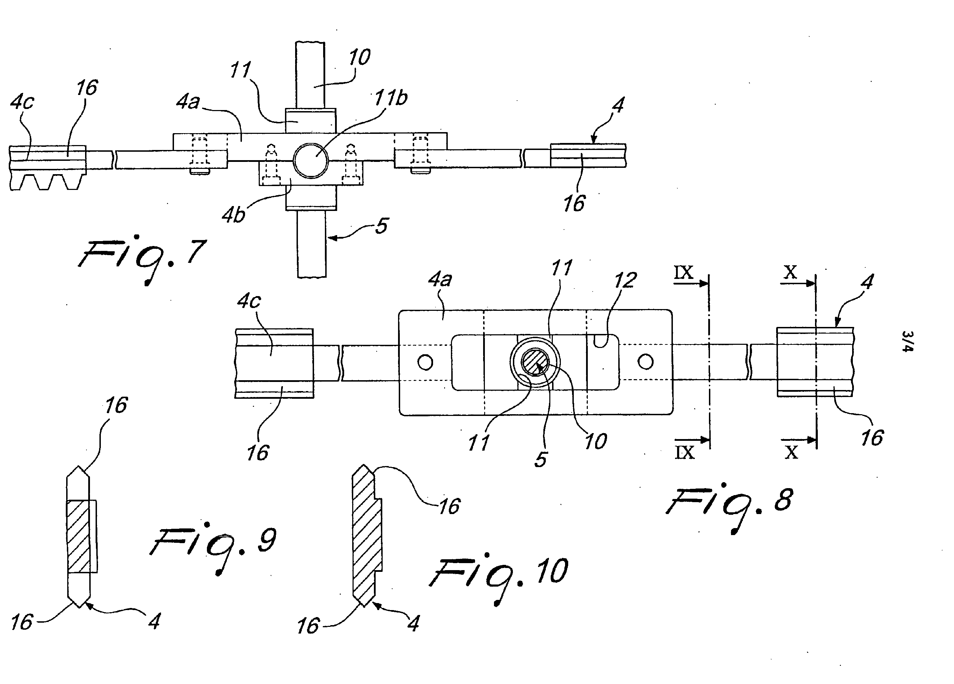

In a practical embodiment, shown in Figures 7 and 8, each connecting sleeve 11 is inserted in an elongated slot 12, which passes through an advantageously flat portion 4a of the respective kinematic transmission element 4.

Two rotation pivots 11a and 11b protrude radially and in mutually opposite directions from the outer lateral surface of the connecting sleeve 11; said pivots are supported by respective rotation seats that are partly formed by the portion 4a and are partly formed by a closure block 4b and are arranged transversely to the longitudinal extension of the slot 12.

As shown in Figure 1, the second motion conversion means 300 advantageously comprise at least two free wheels 30, which are kinematically connected to the output shaft 3, conveniently by interposing gear means that are specified in greater detail hereinafter.

Each free wheel 30 can be moved by at least one kinematic transmission element 4. In a preferred example of embodiment, each free wheel 30 is formed by a driven gear 30a, which is kinematically connected to the output shaft 3 and constitutes the so-called follower of the free wheel 30. The driven gear 30a is engaged in a ratchet-like fashion by at least one ratchet system 30b, which is constituted for example by a pawl that is loaded elastically against the perimetric set of teeth of the driven gear 30a. The ratchet systems 30b are supported by an external set of teeth 30c, constituted for example by a ring gear, which is coaxial to the first gear 30a and has, on its peripheral region, a plurality of meshing teeth.

Advantageously, each kinematic transmission element 4 is provided with a rack rod 4c, which meshes with the external set of teeth 30c of at least one respective free wheel 30.

With reference to Figure 1, a toothed conical body, not shown, rotates rigidly with each free wheel 30 and meshes with a bevel gear 31 that is keyed on the same shaft 32 as a first gear 33 that meshes with a second gear 34, which rotates rigidly with the output shaft 3.

Advantageously, in each free wheel 30 the ratchet systems 30b are mutually spaced, along the circumference traced by the external set of teeth 30c, with spacing arcs that do not correspond to multiples of the pitch of the toothed profile of the driven gear 30a but are, more specifically, equal to multiples of the pitch plus or minus a fraction of the pitch, so that during the back-and-forth motion of the kinematic transmission elements 4 one has in practice, for each individual free wheel 30, an immediate engagement of at least one of the ratchet systems 30b, with consequent driving of the driven gear 30a.

Furthermore, in order to reduce the periodic irregularity at the output shaft 3, provisions are made to ensure that each free wheel 30 meshes, with respect to the wheel or wheels previously meshed by the respective kinematic transmission elements 4, when at least one of said previously meshing wheels is still meshed and is still driving the corresponding free wheel 30. Essentially, when for example a transmission element 4 has substantially completed the active stroke during which the respective free wheel 30 is meshed, there is at least one other free wheel 30 that is already meshed in order to start the active stroke of the respective transmission element 4. This can be achieved in practice by providing a suitably large number of free wheels 30 and accordingly an adequately large number of respective kinematic transmission elements 4, which are intended to engage said wheels over a complete turn of the input shaft 2, so that in a complete turn of the input shaft 2 the kinematic transmission elements 4 are actuated with an alternating motion sequentially and with limited mutual offset.

Advantageously, a large number of kinematic transmission elements 4 furthermore allows to make the kinematic transmission elements 4 work in the portion of their active stroke in which linearity with respect to the rotary motion of the input shaft 2 is maintained, i.e., in which there is a linear-type relation, at least as a first approximation, between the angular motion of the input shaft 2 about its own axis and the movement of the kinematic transmission elements 4. More specifically, with a number of kinematic transmission elements 4 that is for example greater than four it is possible in practice to ensure that each kinematic transmission element 4 rotationally actuates the output shaft 3, by means of the respective free wheel 30, only in the substantially central portion of its active stroke in which said stroke is linear with respect to the rotary motion of the input shaft 2. In greater detail, one can notice that this portion of the active stroke of the kinematic transmission elements 4 in a condition of linearity corresponds to the portion in which the rod-like elements 10 that actuate the respective kinematic transmission elements 4 with a reciprocating motion occupy, in their alternating oscillating motion, the positions in which they are arranged substantially at right angles to the input shaft 2. Therefore, three steps of the active stroke of each kinematic transmission element 4 can be identified: a first step, proximate to the stroke limit that lies further back with respect to the respective free wheel 30, in which the respective free wheel 30 starts to mesh and the movement of the kinematic transmission element 4 reaches the condition of linearity; a second step, which is substantially central with respect to the stroke limits and in which the movement of the kinematic transmission element 4 is in a condition of linearity and the kinematic transmission element 4 acts by actuating the rotary motion of the output shaft 3; a third step of the active stroke, which is proximate to the stroke limit that lies further forward with respect to the respective free wheel 30 and in which the movement of the kinematic transmission element 4 gradually shifts away from linearity and in which there is at least one other kinematic transmission element 4 in the second step of its active stroke.

Furthermore, it has been found experimentally that in order to achieve linearization of the path traced by the kinematic transmission elements 4 over long extents or, in other words, to ensure that identical rotation angles traced by the input shaft 2 in its rotary motion are matched by equal linear motions of the kinematic transmission elements 4 at least over sufficiently long portions of their stroke, it is convenient to arrange the kinematic transmission elements 4 so that their longitudinal axes at least slightly converge or diverge, depending on the direction of engagement of the free wheels 30, toward said free wheels 30.

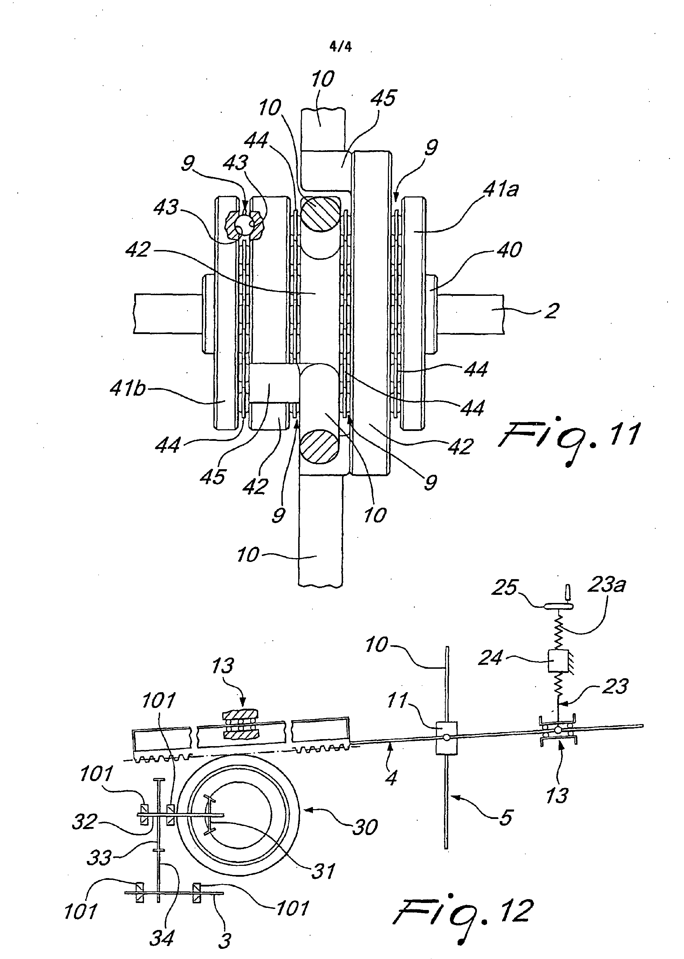

In order to allow adjustment of the converging or diverging arrangement of the kinematic transmission elements 4, it is conveniently possible to provide the guiding means with means for varying adjustably the angle of inclination of the longitudinal axis of the conversion elements 4 with respect to the rotation axis of the input shaft 2; said means are constituted for example by means for varying the distance between the end of the kinematic transmission elements 4 that lies opposite the one that engages the respective free wheel 30 and the axis of rotation of the input shaft 2. For example, said means for adjustably varying the angle of inclination of the longitudinal axis of the transmission elements 4 can act by means of threaded couplings and more precisely, as shown by Figure 12, they can use at least one rod 23 that is provided with a threaded portion 23a that engages in a female thread 24, which is formed on the fixed supporting structure of the variator 1. Conveniently, the rod 23 is coupled in a hinge-like fashion, at one end, to a frame of the guiding means 13 and can be operated, at the other end, by means of a handwheel 25.

The operation of the variator 1 according to the invention is as follows.

The rotation of the input shaft 2 turns the actuation element 6 and, with particular reference to the embodiment of Figure 1, the annular element 7.

The actuation element 6 can be adjusted from the inactive position to an active position or vice versa by way of the means for moving the coupling portion 6a; in particular, by acting on the lever system 21 the annular element 7 can be moved from the position in which it lies on a plane that is substantially perpendicular to the rotation axis of the input shaft 2 to a position in which it is arranged on a plane that is substantially perpendicular to the rotation axis of the input shaft 2 to a position in which it is arranged on a plane that forms an angle of inclination with the rotation axis of the input shaft 2 or vice versa.

When the annular element 7 is arranged on a plane that is substantially perpendicular to the rotation axis of the input shaft 2, the rotation of the driving shaft is not converted into an oscillating motion of the conversion elements 5, and in particular of the rod-like element 10, while when the annular element 7 is arranged on a plane that forms an angle of inclination with the rotation axis of the input shaft 2, the conversion elements 5, and in particular the rod-like element 10, perform, at each full turn of the input shaft about its own axis, an angular forward stroke and an angular return stroke, each of which is equal to twice the inclination angle set for the annular element 7.

The oscillation of the conversion elements 5 causes the actuation, with a reciprocating motion, of the respective kinematic transmission elements 4 and accordingly the application of alternating movements to the respective rack rods 4c, which in turn rotate in their engagement direction the respective free wheels 30, from which the motion is then transmitted to the output shaft 3 by way of the gear means cited above.

More particularly, when the actuation element 6 is set to an active position, following a full turn of the input shaft 2 about its own axis, the conversion elements 5 perform alternating oscillating motions that are shifted ahead or back with respect to each other, thus obtaining a reciprocating motion with mutual offset of the kinematic transmission elements 4 which entails an actuation of the free wheels 30 in succession.

In practice, the transfer of traction between one free wheel 30 and the next one actuated by the respective kinematic transmission element 4 occurs while the preceding free wheel is still applying traction, by virtue of the fact that the number of kinematic transmission elements 4 and of respective free wheels 30 provided is such that in the succession of the actuations of the free wheels 30 that occurs during a turn of the input shaft 2 and is determined by the reciprocating motion with mutual offset of the kinematic transmission elements 4, each free wheel 30 is engaged, and therefore applies traction, while the previously actuated one is still engaged.

All the characteristics of the invention that are indicated above as advantageous, convenient or the like may also be omitted or replaced with equivalents.

The invention thus conceived is susceptible of numerous modifications and variations, all of which are within the scope of the inventive concept.

Thus, for example, there might be a single transmission element provided with a pair of racks, each of which meshes with a respective free wheel, engaging one wheel in its forward motion and the other one in its return motion.

According to another embodiment, each kinematic transmission element 4 is connected to the corresponding conversion element 5 by way of a first spherical hinge and to the respective gear by means of a second spherical hinge, and the guiding means 12 might be omitted. This embodiment, however, has shown problems, at least from the point of view of operation.

In another possible solution that is conceptually similar to the ones described above, the coupling portion 6a is constituted by a truck that is moved by the input shaft 2 and can slide along a circular track supported by a connecting element that is centrally crossed by the input shaft 2 and from which the conversion elements 5 extend in radial directions. In this solution, movement of the truck is achieved by connecting it to the slider element 20 by way of a linkage system that is similar to the linkage 22.

In a more preferred embodiment of the invention there are six kinematic transmission elements 4, which are arranged so as to act sequentially, during the rotation of the input shaft 2, in order to actuate the rotary motion of the output shaft 3.

With reference to Figure 11, in this more preferred embodiment the actuation element 6 comprises a converter that is advantageously composed of a hollow cylindrical element 40, which accommodates internally the input shaft 2 with radial play. The hollow cylindrical element 40 is supported by the input shaft 2 so that it is possible to vary on command the inclination of its longitudinal axis with respect to the rotation axis of the input shaft 2, at least within the limits set by possible interference between said element and the input shaft 2. In particular, the hollow cylindrical element 40 is associated with the input shaft 2 by means of two rotation pivots, which are monolithic with the input shaft 2 and protrude radially from it on diametrically opposite sides. Said rotation pivots engage rotatably respective receptacles, which are formed in diametrically mutually opposite positions on the internal surface of the hollow cylindrical element 40, substantially at its centerline region.

The hollow cylindrical element 40 furthermore has two mutually opposite containment flanges 41a and 41b: one flange is arranged substantially at one end of the hollow cylindrical element 40 and the other flange is arranged substantially at the opposite end. Three central connecting elements 42 are interposed between the containment flanges 41a and 41b, and each connecting element is constituted by a ring that is arranged coaxially and with radial play with respect to the hollow cylindrical element 40 and supports, on diametrically mutually opposite sides, two conversion elements 5, which are respectively constituted by the rod-like elements 10. Rolling bodies 9, conveniently of the spherical type, are advantageously interposed between the central rings and between each flange and the respective contiguous central ring. In this manner, the central rings are connected to the hollow cylindrical element 40 so that they can be inclined with said element with respect to the rotation axis of the input shaft 2, but at the same time are rotationally disengaged from the hollow cylindrical element 40 and accordingly from the input shaft 2. In particular, the containment flanges 41a and 41b and the connecting elements 42 may have respectively, on each one of their mutually facing surfaces, at least one circumferential slot 43, which acts as a rolling seat for the rolling bodies 9. Conveniently, the rolling bodies 9 can be kept spaced and in their seat by means of a cage 44. Advantageously, the rod-like elements 10 are arranged in a radial pattern with respect to the input shaft 2 and are angularly equidistant from each other. Moreover, the connecting elements 42 that are arranged laterally to the centerline region of the hollow cylindrical element 40 are conveniently connected to the respective rod-like elements 10 by means of connecting portions 45, in order to arrange the rod-like elements 10 so that the extensions of their respective longitudinal axes are incident to the rotation axis of the input shaft 2 in a single identical point.

Advantageously, the means for moving the coupling portion 6a are functionally connected to one of the containment flanges 41a and 41b, so that it is possible to pass from an inactive position of the actuation element 6, in which the hollow cylindrical element is arranged substantially coaxially to the input shaft 2, to multiple active positions of the actuation element 6, in which the axis of the hollow cylindrical element is inclined with respect to the rotation axis of the input shaft 2 and vice versa, and to pass from one active position to another.

In practice it has been found that in all of the embodiments the invention has achieved its intended aim and object.

It should be noted that thanks to the particular structure of the variator 1, the input shaft 2 can rotate equally in one direction or in the opposite direction, while for the output shaft 3 one direction of rotation is blocked due to the single direction of engagement of the free wheels 30.

In practice it has been found that the invention makes it is possible to achieve in a simple manner a substantially continuous variation of the angular rotation rate of the output shaft 3 from zero to a maximum rate that can be equal to, or greater than, the angular rotation rate of the input shaft 2 according to the requirements.

It should also be added that the invention has proved to be capable of allowing the transmission of motion with an advantageously rigid coupling, with the possibility to vary continuously the transmitted power.

In practice, the materials used, so long as they are compatible with the contingent use, as well as the dimensions and shapes, may be any according to the requirements.

All the details may further be replaced with other technically equivalent elements.

The disclosures in Italian Patent Application no. VR2002A000027 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A stepless speed variator, comprising an input shaft that can be connected to a source of motive power and a driven output shaft that can be connected to a load, motion transmission means being interposed between said input shaft and said output shaft, **characterized in that** said motion transmission means comprise first motion conversion means adapted to convert the rotary motion of said input shaft into a back-and-forth motion of at least one kinematic transmission element, which is connected kinematically to second motion conversion means for converting said back-and-forth motion into the rotary motion of said output shaft, the stepless speed variator comprising means for varying the stroke of said at least one kinematic transmission element in order to vary the motion transmission ratio.

2. The stepless speed variator according to claim 1, **characterized in that** said first motion conversion means comprise at least one conversion element that can be connected kinematically to said input shaft and is connected to said at least one kinematic transmission element, said at least one conversion element being movable with an oscillating motion on an oscillation plane that passes through the rotation axis of said input shaft and through the connection point between said at least one conversion element and said at least one kinematic transmission element.

3. The stepless speed variator according to one or more of the preceding claims, **characterized in that** said first motion conversion means comprise an actuation element that is functionally connected, with at least one coupling portion, to said at least one conversion element and is adapted to actuate said at least one conversion element in said oscillating motion, said actuation element being rigidly coupled rotationally to said input shaft and being movable on command with respect to said input shaft in order to pass from an inactive position, in which it produces a kinematic uncoupling between said input shaft and said at least one conversion element, to multiple active positions, in each of which it establishes a kinematic connection between said input shaft and said at least one conversion element.

4. The stepless speed variator according to one or more of the preceding claims, **characterized in that** said means for varying the stroke of said at least one kinematic transmission element comprise means for varying the angular oscillation stroke of said at least one conversion element.

5. The stepless speed variator according to one or more of the preceding claims, **characterized in that** said means for varying the angular oscillation stroke of said at least one conversion element comprise means for moving said actuation element from one of said active positions to another or from said inactive position to one of said active positions and vice versa.

6. The stepless speed variator according to one or more of the preceding claims, **characterized in that** said movement means comprise means for moving said at least one coupling portion along a direction that is substantially parallel to the rotation axis of said input shaft.

7. The stepless speed variator according to one or more of the preceding claims, **characterized in that** said at least one kinematic transmission element is guided by guiding means in order to move with a reciprocating translational motion along a direction that is substantially parallel to the rotation axis of said input shaft.

8. The stepless speed variator according to one or more of the preceding claims, **characterized in that** said at least one conversion element comprises at least one rod-like element that is articulated to said at least one kinematic transmission element about its longitudinal axis and about an axis that is perpendicular to said oscillation plane, said rod-like element being slidingly coupled to said at least one kinematic transmission element.

9. The stepless speed variator according to one or more of the preceding claims, **characterized in that** said actuation element comprises a converter for converting rotary motion into reciprocating oscillating motion, said converter being associated with said input shaft and being coupled, with rolling bodies interposed, to said at least one conversion element, said converter rotating rigidly with said input shaft and being orientatable on command with respect to said input shaft.

10. The stepless speed variator according to one or more of the preceding claims, **characterized in that** said converter is functionally connected to said movement means.

11. The stepless speed variator according to one or more of the preceding claims, **characterized in that** it comprises means for linearizing the reciprocating motion of said at least one kinematic transmission element, said means comprising means for adjustably varying the angle of inclination of the longitudinal axis of said at least one kinematic transmission element with respect to the rotation axis of said input shaft.

12. The stepless speed variator according to one or more of the preceding claims, **characterized in that** said means for adjustably varying the angle of inclination of the longitudinal axis of said at least one kinematic transmission element comprise means for varying the distance between the end of said at least one kinematic transmission element that lies opposite the end connected to said second motion conversion means and the rotation axis of said input shaft.

13. The stepless speed variator according to one or more of the preceding claims, **characterized in that** said second motion conversion means comprise at least two free wheels, which are kinematically connected to said output shaft and can be actuated so as to move by said at least one kinematic transmission element.

14. The stepless speed variator according to one or more of the preceding claims, **characterized in that** said at least two free wheels respectively comprise at least one first gear, which is kinematically connected to said output shaft and is engaged in a ratchet-like fashion by at least one ratchet system that is supported by an external set of teeth that meshes with a rack rod formed by said at least one kinematic transmission element.
